# EUROPÄISCHE PATENTSCHRIFT

(11) **EP 1 436 144 B1**
(45) Veröffentlichungstag und Bekanntmachung des Hinweises auf die Patenterteilung: **16.11.2005**
(21) Anmeldenummer: 02779124.3
(22) Anmeldetag: 24.09.2002
(51) Int. Cl.: B32B 15/14, F16C 33/28

(54) **VERFAHREN ZUR HERSTELLUNG VON LAGERMATERIALIEN SOWIE NACH DIESEM VERFAHREN HERGESTELLTE LAGERMATERIALIEN UND VERWENDUNG DER LAGERMATERIALIEN**
METHOD FOR THE PRODUCTION OF SUPPORT MATERIALS, SUPPORT MATERIALS PRODUCED ACCORDING TO SAID METHOD AND USE OF SAID SUPPORT MATERIALS
PROCEDE POUR REALISER DES MATERIAUX DE SUPPORT, MATERIAUX DE SUPPORT FABRIQUES SELON CE PROCEDE ET LEUR UTILISATION

(30) Priorität: 26.09.2001 DE 10147302
(43) Veröffentlichungstag der Anmeldung: 14.07.2004
(73) Patentinhaber: Federal-Mogul Wiesbaden GmbH & Co.KG, 65201 Wiesbaden (DE)
(72) Erfinder: ADAM, Achim, 64569 Nauheim (DE); FUCHSBERGER, Stefan, 65343 Eltville (DE); SCHLÜTER, Joachim, 65187 Wiesbaden (DE)
(86) Internationale Anmeldenummer: PCT/DE2002/003609
(87) Internationale Veröffentlichungsnummer: WO 2003/026884

(56) Entgegenhaltungen:
- EP-A- 0 684 283
- WO-A-96/26793
- DE-A- 3 922 052
- DE-B- 1 132 710
- DE-B- 2 914 437
- GB-A- 821 472
- US-A- 5 229 198
- US-A- 5 364 682
- US-A- 6 148 491
- DATABASE WPI Section Ch, Week 199843 Derwent Publications Ltd., London, GB; Class A14, AN 1998-501953 XP002232715 & JP 10 219270 A (NHK SPRING CO LTD), 18. August 1998 (1998-08-18)
- DATABASE WPI Section Ch, Week 198337 Derwent Publications Ltd., London, GB; Class A88, AN 1983-761470 XP002232716 & JP 58 131429 A (SENJU KINZOKU KOGYO), 5. August 1983 (1983-08-05)

## Beschreibung

Die vorliegende Erfindung betrifft ein Verfahren zur Herstellung von Lagermaterialien mit den Merkmalen des Oberbegriffs des Patentanspruchs 1, die nach diesem Verfahren hergestellten Lagermaterialien und deren Verwendung.

Um Werkstoffe für Verbundlager, die mit einer Kunststoffgleitschicht versehen sind, herzustellen, ist es bekannt, auf einem massiven, insbesondere bandförmigen Stützgerüst, vorzugsweise aus Stahl, aus einer Kupfer- und/oder Aluminiumlegierung, eine Kunststoffgleitschicht vorzusehen, wobei diese Kunststoffgleitschicht als Basismaterial Polytetrafluorethylen (PTFE) umfaßt, das ggf. mit weiteren Zusätzen, so zum Beispiel mit weiteren Polymeren, verschleiß- und/oder reibungsmindernden Zusätzen, versetzt ist. Hierbei wird dieses massive metallische Stützgerüst, das in der DE 11 32 710 AS auch als poröser Metallstreifen bezeichnet ist, mit einer Dispersion oder Paste der Gleitschicht und mit Hilfe eines hiernach angeordneten Walzenpaares gleichmäßig beaufschlagt, so daß anschließend das so beschichtete massive Stützgerüst einer thermischen Behandlung unterworfen werden kann.

Darüber hinaus ist es bekannt, an Stelle des zuvor beschriebenen Stützgerüstes ein metallisches Stützgewebe zu verwenden, das mit einer einseitig das Stützgewebe überdeckenden, überwiegend Polytetrafluorethylen enthaltend Gleitschicht versehen ist. Um dieses bekannte Stützgewebe herzustellen, wird ein Verfahren angewandt, bei dem eine Bahn des metallischen Stützgewebes kontinuierlich mit einer einseitig auf das Stützgewebe aufgelegten Folie, die das Material der Gleitschicht enthält, versehen wird. Hiernach wird bei dem bekannten Verfahren das so mit der Folie belegte Stützgewebe durch eine Presse geführt, so daß die Folie einseitig in die Gewebestruktur des Stützgewebes eingedrückt wird.

Das zuvor beschriebene bekannte Verfahren weist jedoch den Nachteil auf, daß die hierfür benötigten Folien aus dem Gleitschichtmaterial nur relativ aufwendig hergestellt werden können, so daß die hiernach erstellten Lagermaterialien einen relativ hohen Herstellungspreis besitzen.

Der vorliegenden Erfindung liegt die Aufgabe zugrunde, ein Verfahren zur Herstellung von Lagermaterialien der angegebenen Art zur Verfügung zu stellen, mit dem besonders einfach ein metallisches Stützgewebe kontinuierlich mit einer entsprechenden Gleitschicht versehen werden kann.

Diese Aufgabe wird erfindungsgemäß durch ein Verfahren mit den kennzeichnenden Merkmalen des Patentanspruchs 1 gelöst.

Das erfindungsgemäße Verfahren zur Herstellung von Lagermaterialien sieht, wie beim zuvor genannten Stand der Technik, ebenfalls vor, daß hierbei eine Bahn eines metallischen Stützgewebes kontinuierlich mit einer einseitig das Stützgewebe überdeckenden, überwiegend Polytetrafluorethylen (PTFE) enthaltenden Gleitschicht versehen wird, wobei im Unterschied zum eingangs aufgeführten Stand der Technik das Stützgewebe nicht mit einer Folie sondern statt dessen mit einer Paste des Materials der Gleitschicht beschichtet wird. Hierbei wird bei dem erfindungsgemäßen Verfahren das Stützgewebe während der Beschichtung einseitig im vollflächigen Kontakt mit einer weiteren Warenbahn geführt, derart, daß beim Beschichten auf der einen Oberseite, die nachfolgend auch kurz Oberfläche bezeichnet ist, des Stützgewebes die Paste des Materials der Gleitschicht aufgetragen wird, während die hierzu entgegengesetzt angeordnete Oberfläche, die nachfolgend auch kurz Unterfläche bezeichnet ist, des Stützgewebes während dieses Beschichtungsvorganges im vollflächigen Kontakt mit einer weiteren Warenbahn geführt wird, so daß die weitere Warenbahn somit an der Unterfläche des Stützgewebes dicht anliegt.

Das erfindungsgemäße Verfahren weist eine Reihe von Vorteilen auf. So ist zunächst festzuhalten, daß das erfindungsgemäße Verfahren, im Vergleich zu dem zuvor beschriebenen bekannten Verfahren, bei dem eine Folie, die das Material der Gleitschicht enthält, auf das metallische Stützgewebe aufgebracht wird, wesentlich preiswerter die Herstellung von Lagermaterialien erlaubt, zumal das erfindungsgemäße Verfahren ein Einstufenverfahren ist und auf die separate Herstellung einer Folie völlig verzichtet. Desweiteren ermöglicht das erfindungsgemäße Verfahren eine Vereinfachung und eine Vervielfachung der Variation der möglichen Materialien für die Gleitschicht, da beim bekannten Verfahren nicht aus allen möglichen Gleitschichtmaterialien auch entsprechende Folien hergestellt werden können und da desweiteren bei dem erfindungsgemäßen Verfahren die Herstellung von entsprechenden Folien vollständig entfällt. Bedingt dadurch, daß bei dem erfindungsgemäßen Verfahren unmittelbar das pastenförmige Material der Gleitschicht auf das metallische Stützgewebe aufgetragen wird, lassen sich hierbei ohne großen Aufwand nicht nur die Zusammensetzung der Gleitschicht sondern auch deren Dicke beliebig variieren, was ebenfalls beim eingangs genannten Stand der Technik nicht möglich ist. Überraschend konnte festgestellt werden, daß nur der zuvor beschriebene einseitige vollflächige Kontakt der weiteren Warenbahn mit der Unterfläche des Stützgewebes während der Beschichtung wirksam verhindert, daß sich pastöses Material und austretendes Wasser in unerwünschter Weise auf die Unterfläche des Stützgewebes durchdrücken, wie dies bei der direkten Beschichtung des Stützgewebes mit dem pastösen Material der Gleitschicht, d.h. ohne Vorsehung einer entsprechenden weiteren Warenbahn, stets der Fall war. Von daher erlaubt die Anwendung des erfindungsgemäßen Verfahrens eine einfache und problemlose Herstellung eines ordnungsgemäß mit einer Gleitschicht überwiegend einseitig versehenen Stützgewebes.

Im Rahmen der vorliegenden Beschreibung umfaßt der Begriff Stützgewebe alle Konstruktionen, die sich insbesondere dadurch auszeichnen, daß zwischen der Unterfläche und der Oberfläche Aussparungen vorgesehen sind, durch die bei der Beschichtung das auf die Oberfläche aufgebrachte pastöse Material bis zur Unterfläche dringen kann.

Mit dem Begriff Beschichten werden alle Auftragsverfahren bezeichnet, mit denen eine vorgegebene und einstellbare Menge des pastösen Materials der Gleitschicht auf das Stützgewebe aufgebracht werden können, so insbesondere ein Aufgießen, ein Aufstreichen und/oder ein Aufspritzen des pastösen Materials, insbesondere unter Verwendung von entsprechenden Rakel- und Düsensystemen. Desweiteren umfaßt dieser Begriff Beschichten insbesondere auch das Aufbringen des pastösen Materials der Gleitschicht mit Hilfe von mindestens einer Walze und vorzugsweise mit Hilfe von zwei Walzen, wobei eine Walze oder beide Walzen das pastöse Material der Gleitschicht auf das Stützgewebe auftragen und dort gleichzeitig an der Oberfläche und in die Aussparungen gleichmäßig verteilen.

Eine besonders geeignete erste Ausführungsform des erfindungsgemäßen Verfahrens sieht vor, daß hierbei zum Beschichten des Stützgewebes mit dem pastösen Material der Gleitschicht die Bahn des Stützgewebes zusammen mit der weiteren Warenbahn im vollflächigen Kontakt durch den Walzenspalt eines Kalanders geführt wird. Hierbei bewirkt dieser Walzenspalt, daß einerseits eine Vergleichmäßigung und Reproduzierbarkeit des Auftrags des pastösen Materials der Gleitschicht erfolgt, während andererseits durch Variation des Liniendrucks die aufgetragene Menge des pastösen Materials und dessen Durchdringungsgrad variiert werden kann. Die hierbei vollflächig unterliegende weitere Warenbahn stellt sicher, daß hierbei kein Wasser an der Unterseite (Unterfläche) des Stützgewebes austritt, was eine gleichmäßige Verteilung des pastösen Materials auf der Stützgewebe-Oberfläche verhindern würde.

Um die zuvor beschriebenen vorteilhaften Wirkungen der weiteren Warenbahn bei dem erfindungsgemäßen Verfahren noch weiter zu unterstützen, sieht eine zweite, besonders bevorzugte Ausführungsform des erfindungsgemäßen Verfahrens vor, daß als weitere Warenbahn eine solche Warenbahn ausgewählt wird, die eine rauhe Oberfläche besitzt.

Insbesondere dann, wenn als weitere Warenbahn eine Warenbahn ausgewählt wird, deren zum Stützgewebe weisenden Oberfläche, d.h. somit die Oberfläche, die mit der Unterfläche des Stützgewebes während des Beschichtens in Kontakt tritt, mit Partikeln und/oder Unebenheiten in einer Größenordnung zwischen 5 µm und 50 µm, vorzugsweise mit Partikeln und/oder Unebenheiten in einer Größenordnung zwischen 10 µm und 30 µm, versehen wird. Hierbei weist diese Oberfläche der weiteren Warenbahn die zuvor genannten Partikel bzw. Unebenheiten in einer gleichmäßigen Verteilung auf. Durch Auswahl einer derartigen weiteren Warenbahn, deren Oberfläche eine gleichmäßige, von den Partikeln bzw. Unebenheiten hervorgerufene Rauhigkeit aufweist, kann besonders wirksam und reproduzierbar der zuvor beschriebene Austritt von Flüssigkeit, insbesondere von Wasser, während des Beschichtungsvorgangs auf der Unterseite verhindert werden.

Unter Unebenheiten werden regelmäßige oder unregelmäßige Oberflächenstrukturen verstanden, die durch eine entsprechende mechanische oder sonstige Behandlung, beispielsweise durch eine Laserstrahl-Behandlung, erzeugt werden können. Rauhe Oberflächen können auch dadurch ausgezeichnet sein, daß entsprechende Fasern oder Faserbündel von der Oberfläche abstehen, wie dies bei der Verwendung einer textilen weiteren Warenbahn der Fall ist. Besonders bevorzugt weist die weitere Warenbahn eine Oberflächenrauheit auf, die insbesondere zwischen 5 µm und 50 µm und vorzugsweise zwischen 10 µm und 30 µm variiert.

Bezüglich des Materials der weiteren Warenbahn ist festzuhalten, daß hierfür insbesondere Bahnen aus Papier, Kunststoff, Textil oder Metall ausgewählt werden, die für die Dauer des Beschichtungsvorgangs dicht genug sind, kein Wasser durchtreten zu lassen, und sich vollständig an die Bandunterseite anschmiegen können, ohne selbst zu stark nachzugeben. Bei Verwendung von Warenbahnen aus Papier oder Textil bietet es sich vorzugsweise an, daß hierbei die Oberfläche dieser Warenbahn, die in Kontakt mit der Unterfläche des Stützgewebes tritt, hydrophob ist, was beispielsweise durch entsprechende Beschichtungen oder durch Auswahl von hydrophoben Fasern, einfach und ohne Schwierigkeiten bewirkt werden kann.

Um bei dem erfindungsgemäßen Verfahren die zuvor beschriebene Rauhigkeit und/oder die Partikel auf der Oberfläche der weiteren Warenbahn zu erzeugen, sieht eine weitere Ausführungsform des erfindungsgemäßen Verfahrens vor, daß hierbei die entsprechende Oberfläche, die mit der Unterfläche des Stützgewebes während der Beschichtung in Kontakt tritt, unter Ausbildung der Rauhigkeit und/oder der Partikel sandgestrahlt wird, wobei durch die Intensität, die Auswahl der Körnung bei dem Sandstrahl und die Einwirkungszeit besonders einfach und unproblematisch eine gewünschte Rauhigkeit der Oberfläche der weiteren Warenbahn eingestellt werden kann.

Um bei dem erfindungsgemäßen Verfahren die erforderliche und zuvor beschriebene Wasserundurchlässigkeit und/oder Hydrophobie zumindestens der Oberfläche der weiteren Warenbahn sicherzustellen, wird hierbei insbesondere als weitere Warenbahn eine Folie aus biaxial orientiertem Polyester oder aus biaxial orientiertem Polycarbonat ausgewählt, wobei eine derartige Folie von sich aus schon die erforderliche Wasserundurchlässigkeit aufweist, um den unerwünschten Austritt von Wasser oder sonstiger Flüssigkeit über die Unterfläche des Stützgewebes zu verhindern. Desweiteren besitzen diese Folien noch den Vorteil, daß diese Folien neben einer ausgezeichneten Festigkeit aufgrund ihrer biaxialen Orientierung und darüber hinaus noch eine chemische Resistenz aufweisen, so daß eine weitere Warenbahn, die aus einer derartigen Folie besteht, eine hohe Standzeit besitzt.

Bezüglich der Dicke der weiteren Warenbahn und insbesondere der Dicke der zuvor beschriebenen Kunststoff-Warenbahnen ist festzuhalten, daß sich die Dicke dieser Warenbahnen insbesondere auch nach ihrem Material richtet, wobei Warenbahndicken, die zwischen 50 µm und 500 µm, vorzugsweise zwischen 100 µm und 400 µm, variieren, besonders vorteilhaft sind und wiederholt verwendet werden können.

Wie bereits vorstehend bei dem erfindungsgemäßen Verfahren mehrfach ausgeführt ist, wird bei dem erfindungsgemäßen Verfahren eine Paste des Materials, das die Gleitschicht ausbildet, auf das Stützgewebe aufgebracht. Um die Konsistenz dieser Paste auf das jeweilige Stützgewebe, das aufgrund unterschiedlicher Stützgewebekonstruktionen unterschiedlichen Dichten aufweisen kann, einzustellen, wird dem Material eine unterschiedliche Menge Flüssigkeit, so insbesondere Wasser, zugesetzt. Besonders geeignet ist es jedoch bei dem erfindungsgemäßen Verfahren, wenn diesem Wasser zusätzlich noch ein Netzmittel zugesetzt wird, um so auch ohne Zusatz eines organischen Lösungsmittels die gewünschte Konsistenz der Paste einzustellen. Insbesondere wird hierfür als Netzmittel ein nicht-ionisches Netzmittel und vorzugsweise ein Netzmittel auf der Basis eines Alkylpolyglykolethers ausgewählt, wobei jedoch auch weitere Netzmittel, so insbesondere Alkylarylpolyglykolether, Alkylaminpolyglykolether, Alkylaminoxide und/oder Fettsäureester von Polyalkoholen angewendet werden können.

Um die gewünschten Eigenschaften der auf dem Stützgewebe einseitig hergestellten Gleitschicht zu variieren, sieht eine andere Ausgestaltung des erfindungsgemäßen Verfahrens vor, daß hierbei die Paste des Gleitschichtmaterials neben Polytetrafluorethylen (PTFE) desweiteren noch mindestens ein anderes Polymer, vorzugsweise mindestens noch ein hochtemperaturbeständiges Polymer, enthält.

Vorzugsweise wird bei der zuvor beschriebenen Ausgestaltung des erfindungsgemäßen Verfahrens als hochtemperaturbeständiges Polymer ein solches Polymer verwendet, daß aus der Gruppe, die vollaromatische Polyester, vollaromatische Polyamide, Polyetheretherketone und/oder Polyphenylensulfone umfaßt, ausgewählt wird.

Sollen nach dem erfindungsgemäßen Verfahren besonders belastbare und temperaturbeständige Gleitschichten auf dem Stützgewebe einseitig erzeugt werden, so sieht eine andere Ausführungsform des erfindungsgemäßen Verfahrens vor, daß eine solche Paste ausgewählt wird, die neben Polytetrafluorethylen (PTFE) noch zwischen 20 Vol.-% und 60 Vol.-% des hochtemperaturbeständigen Polymer, insbesondere die zuvor genannten Polymere, enthält.

Weiterhin besteht bei dem erfindungsgemäßen Verfahren die Möglichkeit, daß ein Teil des Polytetrafluorethylens, vorzugsweise bis zu 50 Vol.-% des Polytetrafluorethylens (PTFE), durch andere Polymere und insbesondere durch Poly(tetrafluorethylen-co-perfluorvinylmethylether (PFA), Poly(tetrafluorethylen-co-hexafluorpropylen (FEP), Poly(hexafluorisobutylen-covinylidenfluorid)(CM-1), Poly(ethylen-alt-tetrafluorethylen (ETFE) und/oder Polyvinylidenfluorid (PVDF) ersetzt werden, wie dies eine weitere Ausgestaltung des erfindungsgemäßen Verfahrens vorschlägt.

Eine weitere Modifizierung der auf der Oberfläche des Stützgewebes einseitig angeordneten Gleitschicht wird dadurch erreicht, daß bei einer weiteren Ausgestaltung des erfindungsgemäßen Verfahrens eine solche Gleitschichtmaterialpaste verwendet wird, bei der bis zu 50 Vol.-% des hochtemperaturbeständigen Polymeren durch Molybdänsulfid, Wolframsulfid, Bornitrid, Graphit, Blei, Bleioxid, Eisenoxide, Calciumfluorid, Glas- und/oder Keramikpulver und/oder Glas- und/oder Kohlenstoff-Fasern ersetzt werden. Durch eine derartige Modifizierung des pastösen Materials, das auf das Stützgewebe aufgetragen wird, lassen sich in wirksamer Weise die Eigenschaften der Gleitschicht auf die jeweiligen Anforderungen einstellen, wobei es hier nur erforderlich ist, entsprechend pastöse Materialien herzustellen.

Grundsätzlich bestehen bei dem erfindungsgemäßen Verfahren zwei Möglichkeiten, um das Stützgewebe während seiner Beschichtung von seiner Unterfläche her einseitig im vollflächigen Kontakt mit einer weiteren Warenbahn zu führen, wobei die erste Möglichkeit vorsieht, daß gleichzeitig mit der Bahn des metallischen Stützgewebes die weitere Warenbahn dem Beschichtungsschritt zugeführt und hiernach die weitere Warenbahn von der Bahn des metallischen Stützgewebes abgelenkt und, ggf. nach Aufwickeln, verworfen wird. Somit stellt diese erste Möglichkeit darauf ab, daß die weitere Warenbahn nur ein einziges Mal verwendet und hiernach verworfen wird.

Besonders vorteilhaft ist jedoch die zweite Möglichkeit, bei der eine endlose Schlaufe der weiteren Warenbahn unterhalb des Stützgewebes im Bereich der Beschichtung vorgesehen wird, wobei diese weitere Warenbahn dann so geführt wird, daß sie im eigentlichen Beschichtungsschritt im vollflächigen Kontakt mit der Unterseite des Stützgewebes vorgesehen wird. Hiernach wird diese weitere Warenbahn, die ebenfalls wie das Stützgewebe kontinuierlich transportiert wird, umgelenkt und wieder dem Beschichtungsschritt zugeführt, wobei an eine derartige weitere Warenbahn dann erhöhte Anforderungen insbesondere bezüglich der Festigkeit und Haltbarkeit sowie der chemischen Resistenz zu stellen sind, da diese weitere Warenbahn vielfach wieder verwendet wird.

Um das bei dem erfindungsgemäßen Verfahren hergestellte Lagermaterial fertigzustellen, sieht eine Weiterbildung des erfindungsgemäßen Verfahrens vor, daß nach dem Beschichten des Stützgewebes das beschichtete Stützgewebe, ggf. nach Vortrocknung, einer thermischen Behandlung unterworfen wird, um so dauerhaft die Gleitschicht auf dem Stützgewebe auch zu fixieren. Abschließend werden die Enddicke und die Toleranz mittels einer weiteren Walzbehandlung hergestellt. Ggf. kann sich hieran ein Schneidevorgang zur Dimensionierung des einseitig mit der Gleitschicht versehenen Stützgewebes anschließen, das dann zur weiteren Konfektionierung aufgewickelt wird, wobei sowohl die Beschichtung als auch die thermische Behandlung und auch die Dimensionierung vorzugsweise kontinuierlich durchgeführt werden.

Die vorliegende Erfindung betrifft desweiteren ein Lagermaterial, das nach einem der zuvor beschriebenen Ausführungsformen des erfindungsgemäßen Verfahrens hergestellt wird, wobei das erfindungsgemäße Lagermaterial ein Stützgewebe aufweist, das auf seiner einen Oberfläche mit einer Gleitschicht aus überwiegend Polytetrafluorethylen versehen ist und auf seiner anderen Oberfläche weitestgehend keine Gleitschicht besitzt.

Das erfindungsgemäße Lagermaterial wird insbesondere als Gleitelement in Bundbuchsen und vorzugsweise für Fahrzeugtürscharniere verwendet, wobei neben einer hervorragenden Dauerbelastbarkeit unter Beibehaltung einer einwandfreien Funktion insbesondere auch der günstige Preis eines so hergestellten Lagermaterials herauszuheben ist.

Alle in dieser Beschreibung verwendeten Konzentrationsangaben in Volumenprozent beziehen sich auf die fertige Gleitschicht.

Vorteilhafte Weiterbildungen des erfindungsgemäßen Verfahrens sind in den Unteransprüchen angegeben.

Das erfindungsgemäße Lagermaterial wird nachfolgend anhand der Figur 1 und das erfindungsgemäße Verfahren wird nachfolgend anhand von zwei Ausführungsbeispielen, die in den Figuren 2 und 3 schematisch gezeigt sind, näher erläutert. Es zeigen:

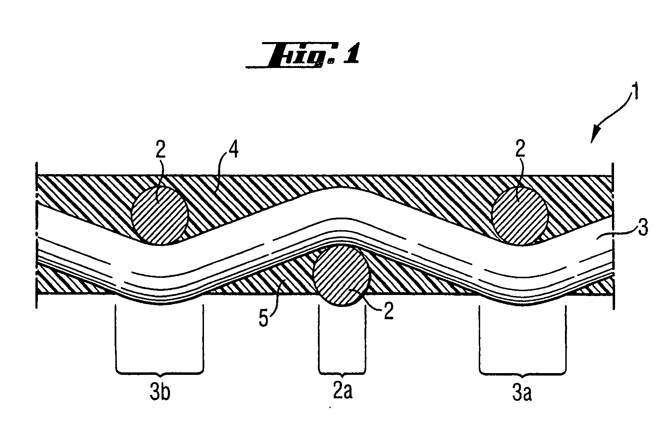

- Figur 1: eine schematische Schnittansicht durch ein einseitig, mit einer Gleitschicht versehenes Stützgewebe;

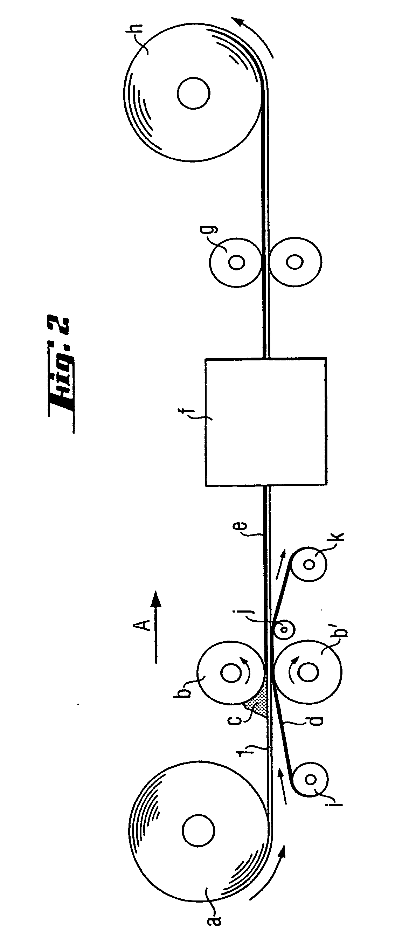

- Figur 2: eine schematische Darstellung einer ersten Ausführungsform des erfindungsgemäßen Verfahrens; und

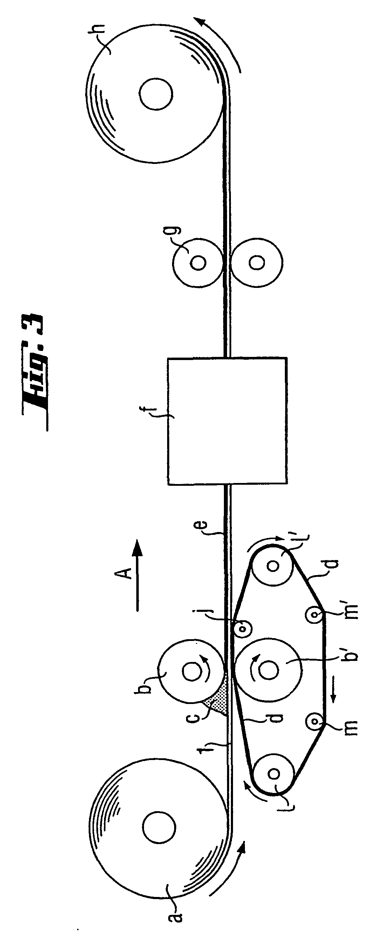

- Figur 3: eine schematische Darstellung einer zweiten Ausführungsform des erfindungsgemäßen Verfahrens.

Das in Figur 1 schematisch abgebildete und insgesamt mit 1 bezeichnete Stützgewebe weist ein erstes Fadensystem 3 und ein senkrecht hierzu verlaufendes zweites Fadensystem 2 auf, wobei die Fadensysteme 2 und 3 aus Metalldrähten bestehen. Auf seiner Oberfläche ist das Stützgewebe 1 mit einer Gleitschicht 4 versehen, wobei die Gleitschicht 4, die überwiegend Polytetrafluorethylen enthält, einseitig das Stützgewebe 1 von seiner Oberfläche her überdeckt und über diese somit hinausragt. Die hierzu entgegengesetzte Unterfläche ist teilweise mit dem identischen Material der Gleitschicht 5 versehen, wobei jedoch die Gleitschicht 5 im Gegensatz zu der Gleitschicht 4 nicht die Unterfläche des Stützgewebes 1 abdeckt, so daß Teile der Fadensysteme 3a, 2a und 3b die äußere Unterfläche des Stützgewebes 1 ausbilden.

In den Figuren 2 und 3 sind die selben Teile mit den selben Bezugszeichen versehen.

Die in Figur 2 schematisch abgebildete Ausführungsform des Verfahrens zur Herstellung von Lagermaterialien sieht eine Lieferrolle a für die Bahn eines metallischen Stützgewebes 1 vor, wobei die Rolle a als Abwickelrolle für das Stützgewebe 1 ausgebildet ist. In Förderrichtung des Stützgewebes 1 gesehen, die mit dem Pfeil A gekennzeichnet ist, ist ein Kalander vorgesehen, dessen Walzen b bzw. b' einen Walzenspalt ausbilden, durch das das Stützgewebe zum Beschichten geführt wird. Hierbei bewirkt die obere Walze b zusätzlich, daß ein pastöses Material c, das die Gleitschicht auf dem Stützgewebe 1 ausbildet, kontinuierlich und in gleicher Menge dem Stützgewebe 1 zugeführt wird. Hieran schließt sich in Pfeilrichtung A gesehen eine thermische Behandlungsvorrichtung f an, durch die das mit der Paste versehene Stützgewebe e transportiert wird. Hier hinter ist ein weiteres Walzenpaar g vorgesehen, daß das mit der Gleitschicht versehene Stützgewebe auf eine gewünschte Enddicke bringt, bevor das Gewebe auf einem Aufwickler h als beschichtetes Stützgewebe aufgewickelt wird.

Das in Figur 3 abgebildete zweite Ausführungsbeispiel unterscheidet sich zu dem zuvor beschriebenen ersten Ausführungsbeispiel in so weit nicht.

Das in Figur 2 abgebildete Ausführungsbeispiel sieht jedoch unterhalb der Walze b' eine mitlaufende weitere Warenbahn d vor, die im Walzenspalt des Kalanders vollflächig an der Unterseite des mit der Paste versehenen Stützgewebes e anliegt. Hierbei wird die mitlaufende weitere Warenbahn d von einer Abwickelrolle i abgezogen, durch den Walzenspalt transportiert, dort für eine vorgegebene Strecke noch in Kontakt mit dem beschichteten Stützgewebe mittels der Walze j geführt und abschließend auf die Aufwickelwalze k aufgewickelt, wobei das Material der weiteren Warenbahn d so gewählt wird, daß es sich hierbei beispielsweise um eine Papierbahn handelt, die nach einmaligem Gebrauch verworfen werden kann.

Im Unterschied hierzu weist das in Figur 3 abgebildete zweite Ausführungsbeispiel eine endlose Schlaufe der weiteren Warenbahn d auf, wobei der kontinuierliche Transport dieser endlosen Warenbahnschlaufe über zwei Umlenkwalzen 1 und 1' sowie zwei Spannwalzen m und m' sichergestellt wird. Auch bei dem in Figur 3 gezeigten Verfahren wird die umlaufende Warenbahn d mittels der Umlenkwalze 1 kontinuierlich dem Walzenspalt zugeführt, so daß seine Oberfläche in Kontakt mit der Unterseite des Stützgewebes durch den Walzenspalt geführt wird. Hierbei stellt die bereits zuvor beschriebene Walze j sicher, daß hinter dem Kalander b, b' dieser vollflächige Kontakt noch für eine vorgegebene Zeit aufrechterhalten bleibt. Da somit die in Figur 3 gezeigte Schlaufe der endlosen weiteren Warenbahn d dauerhaft verwendet wird, sind hieran erhöhte Anforderungen bezüglich Festigkeit, Dimensionsstabilität und chemische Resistenz zu stellen, so daß eine derartige weitere Warenbahn vorzugsweise aus einem polymeren Material oder einem Metallband besteht.

## Patentansprüche

1. Verfahren zur Herstellung von Lagermaterialien, bei dem eine Bahn eines metallischen Stützgewebes kontinuierlich mit einer einseitig das Stützgewebe überdeckenden, überwiegend Polytetrafluorethylen (PTFE) enthaltenden Gleitschicht versehen wird, **dadurch gekennzeichnet, daß** das Stützgewebe mit einer Paste des Materials der Gleitschicht beschichtet wird und daß das Stützgewebe während der Beschichtung einseitig im vollflächigen Kontakt mit einer weiteren Warenbahn geführt wird.

2. Verfahren nach Anspruch 1, **dadurch gekennzeichnet, daß** zum Beschichten die Bahn des Stützgewebes zusammen mit der weiteren Warenbahn durch den Walzenspalt eines Kalanders geführt wird.

3. Verfahren nach Anspruch 1 oder 2, **dadurch gekennzeichnet, daß** als weitere Warenbahn eine Warenbahn mit einer rauhen Oberfläche verwendet wird.

4. Verfahren nach Anspruch 3, **dadurch gekennzeichnet, daß** als weitere Warenbahn eine solche Bahn ausgewählt wird, deren zum Stützgewebe weisenden Oberfläche mit Partikeln und/oder Unebenheiten in einer Größenordnung zwischen 5 µm und 50 µm, vorzugsweise zwischen 10 µm und 30 µm in einer gleichmäßigen Verteilung versehen ist.

5. Verfahren nach einem der vorangehenden Ansprüche, **dadurch gekennzeichnet, daß** als weitere Warenbahn eine Bahn aus Papier, Kunststoff, Textil oder Metall ausgewählt wird.

6. Verfahren nach Anspruch 4 oder 5, **dadurch gekennzeichnet, daß** die eine Oberfläche der weiteren Warenbahn unter Ausbildung der Partikel und/oder der Unebenheiten sandgestrahlt wird.

7. Verfahren nach Anspruch 5, **dadurch gekennzeichnet, daß** als weitere Warenbahn eine Folie aus biaxial orientiertem Polyester oder aus biaxial orientiertem Polycarbonat ausgewählt wird.

8. Verfahren nach Anspruch 7, **dadurch gekennzeichnet, daß** die weitere Warenbahn eine Dicke zwischen 50 µm und 500 µm, vorzugsweise eine Dicke zwischen 100 µm und 400 µm, aufweist.

9. Verfahren nach einem der vorangehenden Ansprüche, **dadurch gekennzeichnet, daß** die Konsistenz der Paste ausschließlich durch Zusatz eines Netzmittels eingestellt wird.

10. Verfahren nach Anspruch 9, **dadurch gekennzeichnet, daß** als Netzmittel ein nicht-ionisches Netzmittel, vorzugsweise ein Netzmittel auf Basis eines Alkylpolyglykolethers, ausgewählt wird.

11. Verfahren nach einem der vorangehenden Ansprüche, **dadurch gekennzeichnet, daß** die Paste des Gleitschichtmaterials neben Polytetrafluorethylen (PTFE) desweiteren noch mindestens ein hochtemperaturbeständiges Polymer enthält.

12. Verfahren nach Anspruch 11, **dadurch gekennzeichnet, daß** das mindestens eine, hochtemperaturbeständige Polymer aus der Gruppe, die vollaromatische Polyester, vollaromatische Polyamide, Polyetheretherketone und/oder Polyphenylensulfone umfaßt, ausgewählt wird.

13. Verfahren nach Anspruch 11 oder 12, **dadurch gekennzeichnet, daß** eine solche Paste ausgewählt wird, die neben Polytetrafluorethylen (PTFE) noch zwischen 20 und 60 Vol.-% des hochtemperaturbeständigen Polymeren aufweist.

14. Verfahren nach einem der Ansprüche 11 bis 13, **dadurch gekennzeichnet, daß** bis zu 50 Vol.-% des Polytetrafluorethylens (PTFE) durch Poly(tetrafluorethylen-co-perfluorvinylmethylether (PFA), Poly(tetrafluorethylen-co-hexafluorpropylen (FEP), Poly(hexafluorisobutylen-covinylidenfluorid)(CM-1), Poly(ethylen-alttetrafluorethylen (ETFE) und/oder Polyvinylidenfluorid (PVDF) ersetzt werden.

15. Verfahren nach einem der vorangehenden Ansprüche, **dadurch gekennzeichnet, daß** eine solche Gleitschichtmaterialpaste ausgewählt wird, bei der bis zu 50 Vol.-% des hochtemperaturbeständigen Polymeren durch Molybdänsulfid, Wolframsulfid, Bornitrid, Graphit, Blei, Bleioxid, Eisenoxide, Calciumfluorid, Glas- und/oder Keramikpulver und/oder Glas- und/oder Kohlenstoff-Fasern ersetzt werden.

16. Verfahren nach einem der vorangehenden Ansprüche, **dadurch gekennzeichnet, daß** das beschichtete Stützgewebe nach seiner Beschichtung einer thermischen Behandlung unterworfen wird.

17. Lagermaterial, hergestellt nach einem der Ansprüche 1 bis 16, mit einem Stützgewebe, wobei das Stützgewebe auf seiner einen Oberfläche eine Gleitschicht aus überwiegend Polytetrafluorethylen (PTFE) und auf seiner anderen Oberfläche weitestgehend keine Gleitschicht besitzt.

18. Verwendung des nach einem der Ansprüche 1 bis 16 hergestellten Lagermaterials als Gleitelement in Bundbuchsen, insbesondere für Fahrzeugtürscharniere.

## Claims

1. Method for the preparation of bearing materials, in which a web of a woven metallic support fabric is provided continuously with a sliding layer covering the woven support fabric on one side and predominantly containing polytetrafluoroethylene (PTFE), **characterized in that** the woven support fabric is coated with a paste of the material of the sliding layer and **in that** during the coating, the woven support fabric is fed in such a way that one side is in contact over the whole area with a further material web.

2. Method according to Claim 1, **characterized in that**, for the coating, the web of the woven support fabric is fed together with the further material web through the roll nip of a calender.

3. Method according to Claim 1 or 2, **characterized in that** a material web having a rough surface is used as the further material web.

4. Method according to Claim 3, **characterized in that** the further material web chosen is a web whose surface facing the woven support fabric is provided with particles and/or irregularities of an order of magnitude of between 5 µm and 50 µm, preferably between 10 µm and 30 µm, in a uniform distribution.

5. Method according to any of the preceding Claims, **characterized in that** a web of paper, plastic, textile or metal is chosen as the further material web.

6. Method according to Claim 4 or 5, **characterized in that** one surface of the further material web is sand-blasted with formation of the particles and/or of the irregularities.

7. Method according to Claim 5, **characterized in that** a film of biaxially oriented polyester or of biaxially oriented polycarbonate is chosen as the further material web.

8. Method according to Claim 7, **characterized in that** the further material web has a thickness of between 50 µm and 500 µm, preferably a thickness of between 100 µm and 400 µm.

9. Method according to any of the preceding Claims, **characterized in that** the consistency of the paste is established exclusively by addition of a wetting agent.

10. Method according to Claim 9, **characterized in that** a nonionic wetting agent, preferably a wetting agent based on an alkylpolyglycol ether, is chosen as the wetting agent.

11. Method according to any of the preceding Claims, **characterized in that** the paste of the sliding layer material furthermore contains at least one polymer stable at high temperatures, in addition to polytetrafluoroethylene (PTFE).

12. Method according to Claim 11, **characterized in that** the at least one polymer stable at high temperatures is selected from the group consisting of fully aromatic polyesters, fully aromatic polyamides, polyether ether ketones and/or polyphenylene sulphones.

13. Method according to Claim 11 or 12, **characterized in that** the paste chosen is a paste which also comprises between 20 and 60% by volume of the polymer stable at high temperatures, in addition to polytetrafluoroethylene (PTFE).

14. Method according to any of Claims 11 to 13, **characterized in that** up to 50% by volume of the polytetrafluoroethylene (PTFE) are replaced by poly(tetrafluoroethylene-co-perfluorovinyl methyl ether (PFA), poly(tetrafluoroethylene-co-hexafluoropropylene (FEP); poly(hexafluoroisobutylene-co-vinylidene fluoride (CM-1), poly(ethylene-alt-tetrafluoroethylene (ETFE) and/or polyvinylidene fluoride (PVDF).

15. Method according to any of the preceding Claims, **characterized in that** the sliding layer material paste chosen is one in which up to 50% by volume of the polymer stable at high temperatures are replaced by molybdenum sulphide, tungsten sulphide, boron nitride, graphite, lead, lead oxide, iron oxides, calcium fluoride, glass powder and/or ceramic powder and/or glass fibres and/or carbon fibres.

16. Method according to any of the preceding Claims, **characterized in that** the coated woven support fabric is subjected to a thermal treatment after its coating.

17. Bearing material produced according to any of Claims 1 to 16, comprising a woven support fabric, the woven support fabric having, on one of its surfaces, a sliding layer predominantly comprising polytetrafluoroethylene (PTFE) and, on its other surface, very substantially no sliding layer.

18. Use of the bearing material produced according to any of Claims 1 to 16 as a sliding element in flange sleeves, in particular for vehicle door hinges.

## Revendications

1. Procédé de fabrication de matériaux de support, dans lesquels une bande d'un tissu métallique de soutien est munie en continu d'une couche de glissement recouvrant sur un côté le tissu de soutien et contenant majoritairement du polytétrafluoroéthylène (PTFE), **caractérisé en ce que** le tissu de soutien est revêtu d'une pâte du matériau de la couche de glissement et **en ce que** le tissu de soutien, pendant le revêtement, est amené sur un côté en contact sur toute la surface avec une autre bande de matériau supplémentaire.

2. Procédé selon la revendication 1, **caractérisé en ce que**, pour le revêtement, la bande du matériau de soutien est amenée conjointement à l'autre bande de matériau à travers l'espacement entre les cylindres d'une calandre.

3. Procédé selon la revendication 1 ou 2,**caractérisé en ce que** l'on utilise comme autre bande de matériau une bande de matériau présentant une surface rugueuse.

4. Procédé selon la revendication 3, **caractérisé en ce que** l'on sélectionne comme autre bande de matériau une bande dont la surface orientée vers le tissu de soutien est munie selon une répartition régulière de particules et/ou d'aspérités d'un ordre de grandeur compris entre 5 µm et 50 µm, de préférence entre 10 µm et 30 µm.

5. Procédé selon l'une des revendications précédentes, **caractérisé en ce que** l'on sélectionne comme autre bande de matériau une bande de papier, de matière plastique, de textile ou de métal.

6. Procédé selon la revendication 4 ou 5, **caractérisé en ce qu'**une surface de l'autre bande de matériau est sablée, en formant les particules et/ou les aspérités.

7. Procédé selon la revendication 5, **caractérisé en ce que** l'on sélectionne comme autre bande de matériau une feuille de polyester à orientation biaxiale ou de polycarbonate à orientation biaxiale.

8. Procédé selon la revendication 7, **caractérisé en ce que** l'autre bande de matériau présente une épaisseur comprise entre 50 µm et 500 µm, de préférence une épaisseur comprise entre 100 µm et 400 µm.

9. Procédé selon l'une des revendications précédentes, **caractérisé en ce que** la consistance de la pâte est réglée exclusivement par ajout d'un agent mouillant.

10. Procédé selon la revendication 9, **caractérisé en ce que** l'on sélectionne en tant qu'agent mouillant un agent mouillant non ionique, de préférence un agent mouillant à base d'un alkylpolyglycoléther.

11. Procédé selon l'une des revendications précédentes, **caractérisé en ce que** la pâte du matériau de la couche de glissement, en plus du polytétrafluoroéthylène (PTFE), contient encore au moins un polymère à haute résistance thermique.

12. Procédé selon la revendication 11, **caractérisé en ce que** le polymère à haute résistance thermique, au moins au nombre de un, est sélectionné parmi le groupe qui comprend des polyesters totalement aromatiques, des polyamides totalement aromatiques, des polyétheréthercétones et/ou des polyphénylènesulfones.

13. Procédé selon la revendication 11 ou 12, **caractérisé en ce que** l'on sélectionne une pâte qui présente, en plus du polytétrafluoroéthylène (PTFE), encore 20 à 60 % en volume du polymère à haute résistance thermique.

14. Procédé selon l'une des revendications 11 à 13, **caractérisé en ce que** l'on remplace jusqu'à 50 % en volume du polytétrafluoroéthylène (PTFE) par un copolymère de tétrafluoroéthylène et de perfluorovinylméthyléther (PFA), un copolymère de tétrafluoroéthylène et d'hexafluoropropylène (FEP), un copolymère d'hexafluoroisobutylène et de fluorure de vinylidène (CM-1), un copolymère alterné d'éthylène et de tétrafluoroéthylène (ETFE) et/ou un polyfluorovinylidène (PVDF).

15. Procédé selon l'une des revendications précédentes, **caractérisé en ce que** l'on sélectionne une pâte de matériau de la couche de glissement dans laquelle jusqu'à 50 % en volume du polymère à haute résistance thermique sont remplacés par du sulfure de molybdène, du sulfure de tungstène, du nitrure de bore, du graphite, du plomb, de l'oxyde de plomb, des oxydes de fer, du fluorure de calcium, de la poudre de verre et/ou de céramique et/ou des fibres de verre et/ou de carbone.

16. Procédé selon l'une des revendications précédentes, **caractérisé en ce que** le tissu de soutien revêtu est soumis après son revêtement à un traitement thermique.

17. Matériau de support fabriqué selon l'une des revendications 1 à 16, comportant un tissu de soutien, le tissu de soutien possédant sur une de ses surfaces une couche de glissement composée majoritairement de polytétrafluoroéthylène (PTFE) et ne présentant aucune surface de glissement sur la plus grande partie de son autre surface.

18. Utilisation du matériau de support fabriqué selon l'une des revendications 1 à 16 en tant qu'élément de glissement dans des douilles à collet, en particulier pour des chamières pour portières automobiles.
